# FASCICULE DE BREVET EUROPEEN

(11) **EP 1 687 178 B1**
(45) Date de publication et mention de la délivrance du brevet: **24.02.2010**
(21) Numéro de dépôt: 04805819.2
(22) Date de dépôt: 09.11.2004
(51) Int. Cl.: B60N 2/48, B60N 2/68

(54) **SIEGE REGLABLE POUR VEHICULE AUTOMOBILE, ET VEHICULE AUTOMOBILE EQUIPE D UN TEL SIEGE.**
VERSTELLBARER SITZ FÜR EIN KRAFTFAHRZEUG UND MIT DEM SITZ VERSEHENES KRAFTFAHRZEUG
ADJUSTABLE SEAT FOR A MOTOR VEHICLE AND A MOTOR VEHICLE PROVIDED WITH SAID SEAT

(30) Priorité: 19.11.2003 FR 0313550
(43) Date de publication de la demande: 09.08.2006
(73) Titulaire: RENAULT S.A.S., 92100 Boulogne Billancourt (FR)
(72) Inventeur: MEYNET, Mathieu, F-92100 BOULOGNE BILLANCOURT (FR); GUIGNARD, Jean Pierre, F-92500 RUEIL MALMAISON (FR); CABRIE, Dominique, F-78114 MAGNY LES HAMEAUX (FR); MAKALA, Jérôme, F-92410 VILLE D'AVRAY (FR)
(86) Numéro de dépôt international: PCT/FR2004/050576
(87) Numéro de publication internationale: WO 2005/051704

(56) Documents cités:
- WO-A-03/057524
- FR-A- 2 663 270
- FR-A- 2 725 669
- FR-A- 2 801 851
- PATENT ABSTRACTS OF JAPAN vol. 0102, no. 70 (M-517), 13 septembre 1986 (1986-09-13) -& JP 61 094829 A (TOYODA AUTOM LOOM WORKS LTD), 13 mai 1986 (1986-05-13)

## Description

La présente invention concerne un siège réglable pour véhicule, ainsi qu'un véhicule automobile équipé d'un tel siège.

Les sièges avant de véhicules automobiles sont généralement prévus avec possibilité de réglage de la position du siège relativement à la structure du véhicule et de réglage de l'inclinaison d'un dossier relativement à une assise. Pour ce faire, le dossier est relié à l'assise par une liaison articulée selon un axe transversal, et l'assise est montée sur le plancher du véhicule par l'intermédiaire de glissières. On connaît par les documents FR 2 801 851 et FR 2 725 669 des sièges réglable pour véhicule automobile.

Néanmoins, un tel siège, qui doit résister en cas de choc violent du véhicule automobile avec un obstacle, présente une armature et des articulations prévues en conséquence qui sont encombrantes et lourdes. On obtient un siège encombrant sans toutefois obtenir une rigidité satisfaisante du siège.

La présente invention a pour objet un siège réglable pour véhicule automobile permettant la conception d'un siège avec une armature légère et mince, tout en améliorant la rigidité et la résistance du siège.

La présente invention a également pour objet un siège réglable pour véhicule automobile permettant d'améliorer la protection des occupants en cas de choc longitudinal ou latéral subi par un véhicule, ou en cas de retournement du véhicule.

La présente invention a également pour objet un siège réglable pour véhicule automobile permettant un réglage simple du siège pouvant être automatisé avec un nombre limité d'actionneurs.

Un tel siège réglable pour véhicule automobile comprend une assise, un organe de liaison inférieure pour relier l'assise à un élément inférieur de structure de véhicule, un dossier, le siège étant conformé pour un réglage ergonomique de la position du siège. Le siège selon l'invention est caractérisé par le fait qu'il comprend un organe de liaison supérieure pour relier une partie supérieure du dossier à un élément supérieur de structure du véhicule, l'organe de liaison supérieure étant adapté pour former une liaison supérieure permettant le réglage ergonomique de la position du siège.

La liaison supérieure permet un maintien de la partie supérieure du dossier relativement à la structure du véhicule et par conséquent une augmentation de la rigidité du siège dans son ensemble. Le siège peut être prévu avec une armature mince et légère sans nuire à la rigidité du siège ou à sa résistance, notamment en cas de choc du véhicule avec un obstacle. On peut envisager de munir le siège d'un dispositif de ceinture embarqué à trois points avec un point de fixation supérieure prévu sur la partie supérieure du dossier. Dans ce cas, la rigidité conférée au dossier par la liaison supérieure permet au dossier de résister à l'effort de traction exercé par la ceinture de sécurité sur la partie supérieure de dossier lorsque le passager est projeté vers l'avant.

En outre, le siège reliant un élément inférieur de structure à un élément supérieur de structure du véhicule permet un renforcement de ladite structure de véhicule, l'armature du siège participant à la rigidité de la structure du véhicule dans son ensemble.

Par réglage ergonomique de la position du siège, on entend un réglage de la position du siège dans son ensemble relativement à la structure du véhicule et/ou un réglage de l'inclinaison du dossier relativement à l'assise.

Par élément supérieur de structure du véhicule, on entend une portion supérieure d'un montant, une traverse, un longeron longitudinal ou une tôle de toit formant la structure supérieure du véhicules c'est-à-dire définissant une limite supérieure d'un habitable du véhicule.

Par la suite, par plan longitudinal on entend un plan sensiblement perpendiculaire au plan de l'assise et au plan du dossier, par axe ou une direction transversale on entend un axe ou une direction perpendiculaire à un plan longitudinal, et par axe ou direction longitudinale on entend un axe ou une direction sensiblement horizontale et située dans un plan longitudinal.

Les caractéristiques complémentaires énumérées ci-après font l'objet des revendications dépendantes.

Pour permettre un réglage d'inclinaison du dossier, l'organe de liaison supérieure peut être relié à la partie supérieure de dossier par une liaison supérieure intermédiaire apte à autoriser un déplacement de la partie supérieure de dossier relativement à l'organe de liaison supérieure avec une rotation selon un premier axe transversal et une translation selon un second axe situé dans un plan longitudinal et différent d'un axe longitudinal.

Dans ce cas, une inclinaison du dossier ou du siège dans son ensemble peut être liée à un déplacement selon un axe longitudinal de l'organe de liaison supérieure relativement à l'organe de liaison inférieure, et un déplacement longitudinal du siège dans son ensemble est lié à un déplacement longitudinal conjoint de l'organe de liaison supérieure et de l'organe de liaison inférieure.

Pour permettre une inclinaison du dossier relativement à l'assise, le dossier peut être relié à l'assise par une articulation inférieure de dossier d'axe transversal. Pour permettre un réglage d'inclinaison du siège dans son ensemble, on peut prévoir que l'assise est reliée à l'organe de liaison inférieure par une articulation intermédiaire d'axe transversal. On peut encore prévoir une combinaison d'une articulation inférieure de dossier et d'une articulation intermédiaire d'assise pour augmenter les possibilités de réglage.

Dans un mode de réalisation, l'organe de liaison supérieure est prévue pour être fixe relativement à un élément supérieur de structure et l'organe de liaison inférieure est adapté pour être montée avec possibilité de déplacement selon un axe longitudinal relativement à un élément inférieur de structure du véhicule.

Dans un autre mode de réalisation, l'organe de liaison supérieure est adapté pour être monté avec possibilité de déplacement selon un axe longitudinal relativement à un élément inférieur de structure du véhicule et l'organe de liaison inférieure est prévu pour être fixe relativement à un élément inférieur de structure

Avantageusement, l'organe de liaison supérieure est adapté pour être monté avec possibilité de déplacement selon un axe longitudinal relativement à un élément supérieur de structure du véhicule et l'organe de liaison inférieure est adapté pour être monté avec possibilité de déplacement selon un axe longitudinal relativement à un élément inférieur de structure du véhicule. Dans ce cas, on peut régler à la fois la position du siège relativement à la structure du véhicule dans son ensemble ainsi que l'inclinaison du dossier ou du siège dans son ensemble.

Un tel mode de réalisation permet également d'envisager un siège prévu avec un réglage longitudinal de la position du siège relativement à la structure du véhicule sans prévoir de réglage d'inclinaison du dossier. Pour cela, on prévoira un siège qui n'est pas muni d'articulation d'axe transversal entre le dossier et l'assise ou entre l'assise et l'organe de liaison inférieure.

Dans tous les cas, les organes de liaison mobiles peuvent être prévus avec des moyens de blocage munis de moyens de verrouillage/déverrouillage pour autoriser ou empêcher un mouvement du siège.

L'invention concerne également un véhicule automobile équipé d'au moins un siège selon un aspect de l'invention, le siège étant relié par un organe de liaison inférieure à un plancher du véhicule et un organe de liaison supérieure de dossier à un élément supérieur de la structure du véhicule automobile.

Dans un mode de réalisation, le véhicule comprend un poste de commande mobile dans son ensemble relativement au siège, selon un axe longitudinal. Un poste de commande mobile, comprenant généralement un volant et un pédalier, ainsi que des boutons de commande, peut avantageusement être prévu dans tous les cas où la position longitudinale de l'assise n'est pas réglable, ou dans le cas où un réglage de position longitudinale de l'assise relativement à la structure du véhicule est liée à un réglage d'inclinaison du dossier.

La présente invention et ses avantages seront mieux compris à l'étude de la description détaillée de modes de réalisation pris à titre d'exemples nullement limitatifs, et illustrés par des figures sur desquelles :
- la figure 1 représente une vue schématique en coupe longitudinale de l'habitacle d'un véhicule automobile muni d'un siège selon un aspect de l'invention;
- la figure 2 représente une vue en coupe transversale partielle selon II-II de l'habitacle de véhicule automobile muni du siège, selon la figure 1;
- la figure 3 représente un schéma cinématique d'un mode de réalisation d'un siège;
- la figure 4 représente un schéma cinématique d'un second mode de réalisation d'un siège; et
- la figure 5 représente un schéma cinématique d'un troisième mode de réalisation d'un siège.

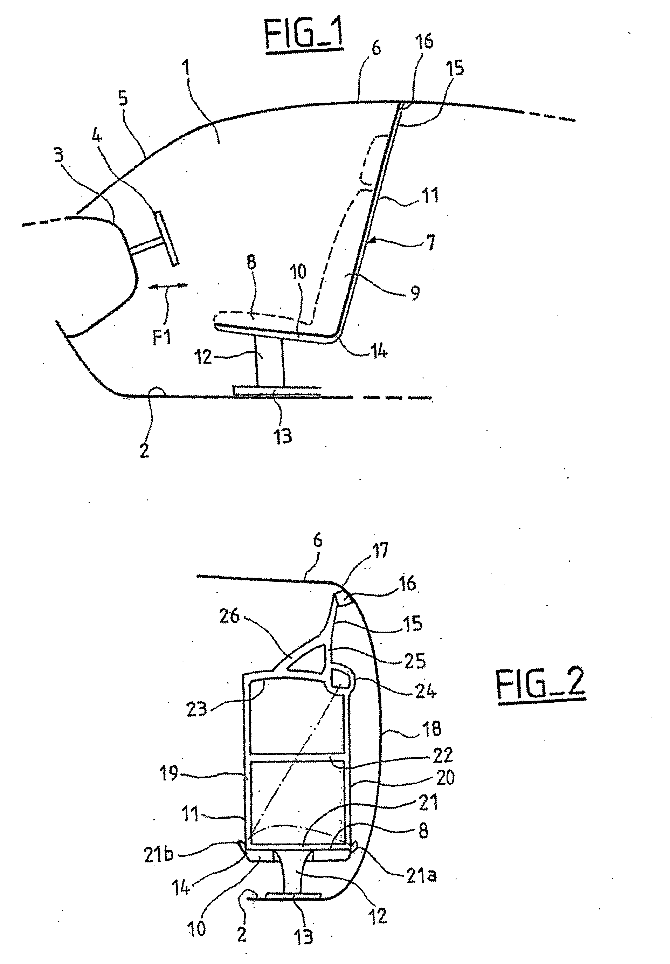

Sur la figure 1, un habitacle 1 d'un véhicule automobile représenté partiellement est délimité par un plancher 2, un tableau de bord 3 muni d'un volant 4, un pare-brise avant 5 et un toit 6. Un siège avant de conducteur référencé 7 dans son ensemble est disposé face au volant 4.

Le siège 7 comprend une assise 8 et un dossier 9. Une armature du siège 7 est représentée en traits forts, un matelassage ou garniture du siège 7 étant délimité par des traits en pointillés.

L'armature du siège 7 comprend une portion d'assise 10 s'étendant sensiblement horizontalement en étant légèrement inclinée vers l'arrière et une portion de dossier ou portion d'appui 11 s'étendant sensiblement verticalement en étant sensiblement inclinée vers l'arrière. La portion d'assise 10 de l'armature est reliée au plancher 2 par l'intermédiaire d'une liaison d'assise sous la forme d'un plot central ou pied 12 et d'un organe de liaison inférieure 13, le pied 12 présentant une extrémité supérieure fixée à la portion d'assise 10 et une extrémité inférieure fixée à l'organe de liaison inférieure 13. La portion d'appui 11 et la portion d'assise 10 sont reliées par une portion de liaison courbe 14 formant une liaison inférieure de dossier rigide entre la portion d'assise 10 et la portion d'appui 11. La portion d'appui 11 est munie à son extrémité supérieure d'un bras de fixation 15 s'étendant vers le haut à partir du bord supérieur de la portion d'appui 11, l'extrémité du bras 15 opposé à la portion d'appui 11 étant reliée à un élément supérieur de structure du véhicule automobile par un organe de liaison supérieure 16.

Comme on peut mieux le voir sur la figure 2, l'organe de liaison supérieure 16 est disposé entre le bras 15 et un longeron supérieure 17 du véhicule, c'est-à-dire un élément longitudinal de structure du véhicule délimitant un bord supérieur du toit 6. L'habitacle 1 est limité latéralement par un montant 18 situé sensiblement à côté du dossier 9 du siège 7. Un tel montant 18, nommé « pied-milieu », est généralement disposé entre une ouverture de porte arrière et une ouverture de porte avant formées dans la structure du véhicule. Un tel montant contribue à la rigidité de la structure du véhicule automobile, malgré les ouvertures nécessaires pour l'accès aux places avant et arrière.

Comme cela apparaît mieux sur la figure 2 où le siège 7 a été représenté sans matelassage, la portion d'appui 11 comprend deux montants latéraux 19, 20, une traverse inférieure 21, une traverse intermédiaire 22, et une traverse supérieure 23. Une portion de logement 24 est formée à l'intersection du montant 20 situé du côté du pied-milieu 18 et de la traverse supérieure 23 de l'armature de la portion d'appui 11. La portion de logement 24 se présente sous la forme d'un cadre de profil sensiblement carré permettant le logement et la fixation d'un enrouleur de ceinture de sécurité non représenté, pour former un point d'attache haut d'une ceinture de sécurité embarquée sur le siège 7, qui est également muni de moyens d'attache inférieure sous la forme d'une première patte de fixation 21a prévue à l'extrémité latérale de la traverse inférieure 21, du côté du pied-milieu 18, et une seconde patte de fixation 21b prévue à l'extrémité opposée de la traverse inférieure 21 de la portion d'appui 11. La première patte 21a est prévue pour une fixation permanente d'une extrémité d'une ceinture de sécurité, l'autre patte 21b étant prévue pour la fixation d'un dispositif de fixation amovible d'un portion intermédiaire de la ceinture de sécurité. Une ceinture de sécurité s'étendant entre les différents points d'attache est schématisée en traits mixtes C.

L'armature comprend une branche sensiblement verticale 26 reliant le bras 15 au cadre 24 et une branche oblique 26 reliant le bras 15 sensiblement au milieu de la traverse supérieure 23 de la portion d'appui 11.

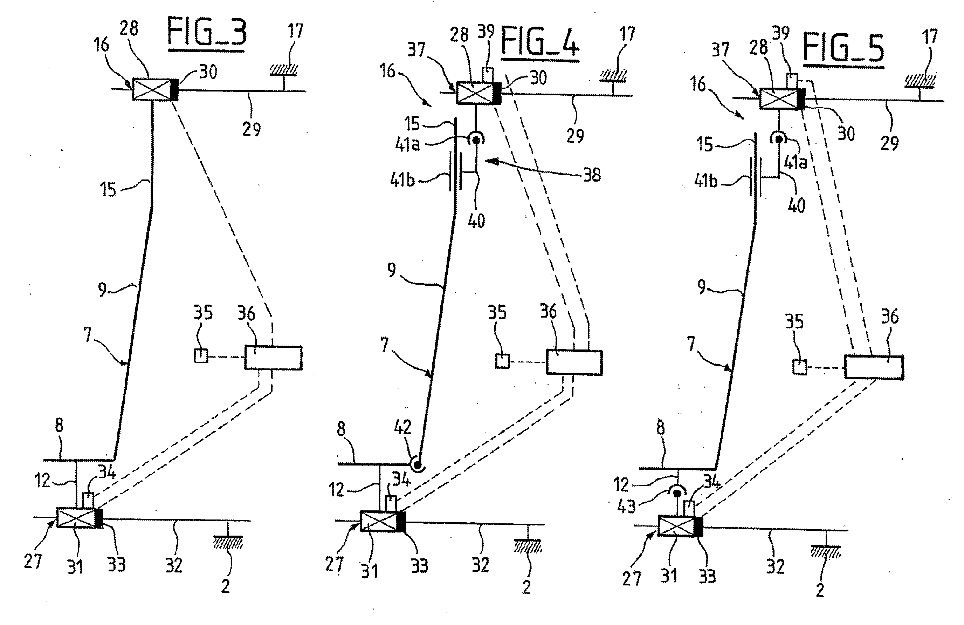

Sur la figure 3, où les références aux éléments semblables à ceux des figures 1 et 2 ont été reprises, les liaisons supérieure et inférieure du siège 7 sont adaptées pour un réglage de la position longitudinale du siège 7 relativement à la structure du véhicule.

L'organe de liaison supérieure 16 est prévu sous la forme d'un premier chariot supérieur 28 solidaire du bras 15 et apte à coulisser sur un rail longitudinal supérieur 29 solidaire de l'élément supérieure de structure 17 représenté de façon schématique par un point fixée. Le premier chariot 28 peut être déplacé longitudinalement en avant ou en arrière relativement à l'élément supérieur de structure 17, comme illustré par la flèche F2. Un organe de blocage supérieur 30 solidaire du premier chariot 28 verrouillée la position du premier chariot 28 sur le rail supérieur 29. L'organe de blocage supérieur 30 peut être déverrouillé.

Un organe de liaison d'assise 13 est prévu sous la forme d'un second chariot inférieur 31 solidaire du pied 12 et apte à coulisser sur un rail longitudinal inférieur 32 solitaire du plancher 2, représenté de façon schématique par un point fixe. Le chariot inférieur 31 peut être déplacé longitudinalement en avant ou en arrière relativement au rail inférieur 32, comme illustré par la flèche F3. Un second organe de blocage inférieur 33 solidaire du second chariot 31, verrouille la position du second chariot 31 sur le rail inférieur 32. L'organe de blocage inférieur 33 peut être déverrouillé. Un actionneur 34 associé au second chariot 31 est apte à provoquer un déplacement du second chariot 31 le long du rail inférieur 32 lorsque l'organe de blocage inférieur 33 est déverrouille. L'actionneur 34 peut être par exemple du type moteur électrique.

Le siège 7 comprend un bouton de commande 35 relié à une unité de commande 36, qui est par ailleurs reliée à l'organe de blocage supérieur 30, à l'organe de blocage inférieur 33 et à l'actionneur 34. L'unité de commande 36 comprend des moyens mémoire pour le stockage d'un programme d'ordinateur comprenant des modules de commande pour la commande d'actionneurs et d'organes de blocage associés à des organes de liaison du siège 7 et un microprocesseur pour la mise en oeuvre d'un tel programme.

Pour un réglage de la position longitudinale du siège 7 commandé à partir du bouton de commande 35, l'unité de commande 36 provoque le déverrouillage des organes de blocage supérieur 30 et inférieur 33, puis commande l'actionneur 34 pour un déplacement longitudinal du second chariot 31, qui entraînera le siège 7 dans son ensemble. Une fois la position désirée atteinte, les organes de blocage 30, 33 sont verrouillé pour assurer le maintien du siège 7 en position.

Bien entendu, les organes de bocage 30, 33 en position verrouillée sont dimensionnés pour retenir le siège 7 en cas de choc subi par le véhicule automobile. On prévoira de préférence que les organes de blocage 30, 33 sont en position verrouillée par défaut, en étant par exemple sollicités par des éléments élastiques du type ressort. Les organes de blocage 30, 33 seront dans ce cas équipés d'actionneur commandés à partir de l'unité de commande 36, et apte à exercer des efforts de déverrouillage à l'encontre des éléments élastiques.

On a décrit un actionneur associé à l'organe de liaison inférieure 13. On pourrait prévoir un actionneur associé l'organe de liaison supérieure 16, ou deux actionneurs, c'est-à-dire un pour l'organe de liaison inférieure 13, et un autre pour l'organe de liaison supérieure 16.

Dans une variante avec réglage manuel, on peut prévoir que le siège 7 soit dépourvu d'actionneur, et que les organes de blocage 30, 33 soit munis de moyens de déverrouillage manuels.

L'armature du siège 7, reliant le plancher 2 de l'habitacle au longeron 17 du toit 6 contribue à la rigidité d'ensemble de la structure du véhicule automobile, ce qui permet notamment d'améliorer la protection des occupants en cas d'accident, notamment en cas de retournement du véhicule ou en cas de choc latéral subi par le véhicule, en renforçant la cellule de l'habitacle du véhicule. Pour faciliter un accès, on pourrait envisager de limiter une épaisseur du pied-milieu ou de supprimer le pied-milieu si la rigidité conférée par le siège à la structure du véhicule est suffisante.

Lorsque les organes de blocage sont verrouillés, le siège est maintenu par une partie inférieure et par une partie supérieure du dossier de sorte que l'on peut prévoir une armature légère et peu encombrante tout en assurant la rigidité du siège. En outre, comme la partie supérieure de dossier est retenue par une liaison supérieure, le dossier présente une résistance améliorée en cas de choc avant du véhicule. Dès lors, on peut prévoir un dispositif de ceinture de sécurité embarqué sur le siège. Un dispositif de ceinture embarqué sur un siège permet un meilleur positionnement de la ceinture de sécurité sur le torse du passager malgré des réglages de position du siège et d'inclinaison de dossier, et une action de la ceinture de sécurité améliorée, pour éviter ou atténuer des traumatismes subits par le passager en cas de choc du véhicule avec un obstacle.

La prévision d'une liaison supérieure et d'une liaison inférieure du siège permet de prévoir des liaisons moins résistantes et moins encombrantes, tout en améliorant la résistance du siège. Ainsi, comme on peut le voir sur la figure 2, on peut prévoir une fixation inférieure à l'aide d'un pied central permettant de dégager un espace disponible sous l'assise du siège.

Sur la figure 4, où les références aux éléments semblables à ceux de la figure 3 ont été reprises, le siège 7 diffère du mode de réalisation précédent en ce que le dossier 9 est relié à l'assise 8 par l'intermédiaire d'une articulation inférieure de dossier 42 apte à permettre un déplacement angulaire relatif entre le dossier 9 et l'assise 8 selon un axe transversal, et en outre en ce que le bras 15 est relié à l'organe de liaison supérieure 16 par une liaison intermédiaire 38. L'organe de liaison supérieure 16 est associée à un actionneur supérieur 39 relié à l'unité de commande 36.

La liaison intermédiaire 38 est prévue pour autoriser au moins un déplacement angulaire relatif entre le dossier 9 et l'organe de liaison supérieure 16, selon un axe transversal, et une translation dans un plan longitudinal du dossier 9 relativement à l'organe de liaison supérieure 16, selon un axe diffèrent d'un axe longitudinal.

La liaison intermédiaire 38 est préuve dans le mode de réalisation illustré sous la forme d'un élément intermédiaire 40 relié à une extrémité au premier chariot supérieur 28 par une liaison pivot 41a possédant un degré de liberté en rotation selon un axe transversal, et relié du côté opposé au bras 15 par l'intermédiaire d'une liaison pivot glissant 41b, la liaison pivot glissant 41b autorisant un degré de liberté en rotation selon un axe situé dans un plan longitudinal, c'est-à-dire dans le plan de la figure, et une rotation selon le même axe. L'axe de translation de la liaison pivot-glissant 41b est ici sensiblement vertical.

Ce mode de réalisation permet d'augmenter les possibilités de réglage de la position du siège 7. Les réglages du siège 7 peuvent être effectués en agissant uniquement sur les positions longitudinales des chariots supérieur 28 et inférieur 31.

Un déplacement simultané dans un même sens et à une même vitesse du chariot inférieure 31 et du chariot supérieur 28 entraîné un déplacement longitudinal du siège 7 dans son ensemble sans modifier une inclinaison du dossier 9 relativement à l'assise 8. Un réglage de la position longitudinale du siège 7 s'effectuera de la même façon que pour le mode de réalisation illustré par la figure 3 et décrit auparavant.

Un réglage de l'inclinaison du dossier 9 peut être réalisé en déplaçant le premier chariot 28 relativement au second chariot 31.

Par exemple, pour faire basculer le dossier 9 vers l'arrière comme illustré par la flèche F6, on pourra maintenir fixe le second chariot 31, et déplacer vers l'arrière le premier chariot 28 comme illustré par la flèche F7. Dans ce cas, l'extrémité supérieure du dossier 9, c'est-à-dire le bras 15, est entraînée vers l'arrière par le chariot supérieur 28, et l'extrémité inférieure du dossier 9 est retenue par l'articulation inférieure de dossier 42. Le dossier 9 bascule donc vers l'arrière en pivotant autour de l'axe de l'articulation inférieure de dossier 42. La liaison pivot 41a de la liaison intermédiaire 38 permet au bras 15 et à la liaison pivot-glissant 41b de pivoter relativement au premier chariot 28, la liaison pivot-glissant 41b permettant au bras de 15 de se déplacer relativement à l'élément intermédiaire 40.

Si on maintient le premier chariot 28 fixe et que l'on provoque un déplacement vers l'avant du second chariot 31 comme illustré par la flèche F5, on obtient également un basculement vers l'arrière du dossier 9. Néanmoins, on provoque simultanément un déplacement vers l'avant de l'assise 8.

Lorsque le premier chariot 28 et le second chariot 31 sont maintenus fixes par les organes de blocage 30, 33, une inclinaison du dossier 9 ne peut être modifiée, car, compte tenu de la cinématique de mouvement des différenties liaisons du siège, une rotation du dossier 9 doit s'accompagner d'un déplacement relatif des premiers et second chariots 28, 31.

On notera que la position de l'axe de la liaison pivot-glissant 41b varie lors de l'inclinaison du dossier 9. On prévoira que dans une plage de réglage d'inclinaison du dossier 9, l'axe de la liaison pivot-glissant 41b ne soit jamais aligné avec l'axe longitudinal de déplacement du premier chariot 28, pour assurer qu'un blocage simultané des premier et second chariot 28, 31 provoque un blocage du dossier et du siège dans son ensemble.

Le bouton de commande 35 peut être prévu pour permettre à la fois une commande de la position longitudinale du siège 7 et une commande d'inclinaison du dossier 9. En fonction d'une position des boutons de commande 35, l'unité de commande 36 pourra déverrouiller les organes de blocage 30, 33 de l'organe de liaison inférieure 13 et de l'organe de liaison supérieure 16 selon que ces derniers doivent être déplacés ou non, et commander de façon synchronisée l'organe de liaison inférieure 13 et l'organe de liaison supérieure 16 pour obtenir la position longitudinale souhaitée et l'inclinaison du dossier 9 souhaitée.

On notera que la liaison supérieure, formée par le chariot 28, la liaison pivot 41a, et la liaison pivot-glissant 41b, et la liaison inférieure formée par le second chariot 31 sont adaptées pour permettre un réglage simple du siège nécessitant un nombre d'actionneurs limités.

Sur la figure 5, où les références aux éléments semblables à ceux de la figure 4 ont été reprises, le siège 7 diffère du mode de réalisation précédant en ce que l'articulation inférieure de dossier est remplacée par une articulation intermédiaire 43 d'axe transversal prévue entre le pied 12 et le chariot inférieur 31. Dès lors, en cas déplacement relatif selon une direction longitudinale du premier chariot 28 et du second chariot 31, on obtiendra un basculement du siège 7 dans son ensemble autour d'un axe défini par l'articulation intermédiaire 43.

Bien entendu, pour augmenter des possibilités de réglage du siège 7, on peut disposer sur le siège 7 à la fois une articulation intermédiaire 43 et une articulation inférieure de dossier telle que représentée sur la figure 4. Dans ce cas, on prévoira avantageusement que l'articulation intermédiaire 43 soit munie de moyens de verrouillage pour permettre un maintien de la position de l`assise 8, et éventuellement d'un actionneur de réglage de position.

Dans une variante des modes de réalisation représentés sur les figures 4 et 5, on pourrait prévoir qu'un seul parmi les premier et second chariots 28, 31 puissent se déplacer longitudinalement. Dans ce cas, on pourrait prévoir qu'un tableau de bord 3 puisse être déplacé longitudinalement afin de régler la position du volant et d'un pédalier (non représenté) des boutons de commande relativement à l'assise 8 de l'ensemble de siège 7, comme cela est représenté par une flèche F1 sur la figure 1.

On a décrit un mode de réalisation particulier pour la liaison intermédiaire entre le bras 15 et le premier chariot 28. Bien entendu, l'invention n'est pas limitée à ce mode de réalisation. On peut prévoir toute liaison ou association de liaisons autorisant à la fois un déplacement dans un plan longitudinal du dossier relativement à l'élément de structure et un déplacement angulaire selon un axe transversal, tout en étant apte à interdire déplacement d'une partie supérieure du dossier lorsque des organes de blocage sont verrouillés.

A titre d'exemple nullement limitatif, on pourrait prévoir de remplacer la liaison pivot-glissant 41b par une liaison glissière n'autorisant pas de rotation selon l'axe de coulissement. On pourrait prévoir que le bras 15 soit relié à l'élément intermédiaire 40 par une liaison pivot d'axe transversal, et que l'élément intermédiaire 40 soit relié au premier chariot 28 par une liaison glissière ou une liaison pivot-glissant. On pourrait encore prévoir que le bras 15 soit relié par une liaison pivot d'axe transversal à un patin apte à coulisser sur un rail solidaire du premier chariot, le rail s'étendant vers le bas selon une direction située dans un plan longitudinal et différente de la direction longitudinale de déplacement du chariot.

Grâce à l'invention, on obtient un siège permettant d'alléger l'armature d'un siège tout en augmentant la rigidité du siège, notamment en cas de choc. Le siège peut être adapté pour permettre des réglages ergonomiques de la position du siège. Les réglages de la position du siège peuvent être obtenus simplement à partir d'un nombre d'actionneurs limités. L'armature de siège allégée permet de préserver l'espace habitable d'un habitacle du véhicule automobile, notamment pour des passagers arrière. Le siège peut être utilisé pour rigidifier la structure du véhicule automobile dans son ensemble.

## Revendications

1. Siège réglable pour véhicule automobile comprenant une assise (8), un organe de liaison inférieure (13) pour relier l'assise à un élément inférieur (2) de structure de véhicule, et un dossier (9), le siège étant conformé pour permettre, dans sa position d'utilisation, le réglage de la position du siège, **caractérisé par le fait qu'**il comprend un organe de liaison supérieure (16) pour relier une partie supérieure (15) du dossier à un élément supérieur (17) de structure du véhicule, l'organe de liaison supérieure (16) étant adapté pour former une liaison supérieure permettant le réglage de la position du siège, dans sa position d'utilisation.

2. Siège selon la revendication1, **caractérisé par** la fait que l'organe de liaison supérieure (16) est relié à la partie supérieure (15) de dossier par une liaison intermédiaire supérieure (38) apte à autoriser un déplacement de la partie supérieure (15) de dossier relativement à l'organe de liaison supérieure (16) avec une rotation selon un premier axe transversal et une translation selon un second axe situé dans un plan longitudinal et différent d'un axe longitudinal.

3. Siège selon l'une quelconque des revendications 1 ou 2, **caractérisé par le fait que** l'assise (8) est reliée à l'organe de liaison inférieure (13) par une articulation intermédiaire d'axe transversal.

4. Siège selon l'une quelconque des revendications, **caractérisé par le fait que** le dossier (9) est relié à l'assise par une articulation inférieure de dossier (42) d'axe transversal.

5. Siège selon l'une quelconque des revendications 2 à 4, **caractérisé par le fait que** l'organe de liaison supérieure (16) est prévue pour être fixe relativement à un élément supérieur de structure et l'organe de liaison inférieure (13) est adapté pour être monté avec possibilité de déplacement selon un axe longitudinal relativement à un élément inférieur de structure du véhicule.

6. Siège selon l'une quelconque des revendications 2 à 4, **caractérisé par le fait que** l'organe de liaison supérieure (16) est adapté pour être monté avec possibilité de déplacement selon un axe longitudinal relativement à un élément supérieur de structure du véhicule et l'organe de liaison inférieure (13) est prévu pour être fixe relativement à un élément inférieur de structure.

7. Siège selon l'une quelconque des revendications 1 à 4, **caractérisé par le fait que** l'organe de liaison supérieure (16) est adapté pour être monté avec possibilité de déplacement selon un axe longitudinal relativement à un élément supérieur (17) de structure du véhicule et l'organe de liaison inférieure (13) est adapté pour être monté avec possibilité de déplacement selon un axe longitudinal relativement à un élément inférieur de structure du véhicule.

8. Siège selon l'une quelconque des revendications précédentes, **caractérisé par le fait qu'**une liaison est munie de moyens de blocage (30, 33) pouvant être déverrouillés.

9. Véhicule automobile équipé d'au moins un siège selon l'une quelconque des revendications précédentes, le siège (7) étant relié par la liaison d'assise (13) à un plancher du véhicule (2) et par la liaison supérieure de dossier (16) à un élément supérieur de structure (17) du véhicule automobile.

10. Véhicule selon la revendication 9, **caractérisé par le fait qu'**il comprend un poste de commande (3) mobile selon un axe longitudinal relativement au siège (7).

## Claims

1. Adjustable seat for a motor vehicle comprising a cushion (8), a lower connecting device (13) for connecting the cushion to a lower structural element (2) of the vehicle and a backrest (9), the seat being designed to allow, in its position of use, adjustment of the position of the seat, **characterized in that** it comprises an upper connecting device (16) for connecting an upper part (15) of the backrest to an upper structural element (17) of the vehicle, the upper connecting device (16) being suitable for forming an upper connection allowing adjustment of the position of the seat in its position of use.

2. Seat according to Claim 1, **characterized in that** the upper connecting device (16) is connected to the upper part (15) of the backrest by an intermediate upper connection (38) able to allow a displacement of the upper part (15) of the backrest relative to the upper connecting device (16) with a rotation along a first transverse axis and a translatory motion along a second axis located in a longitudinal plane and different from a longitudinal axis.

3. Seat according to either of Claims 1 and 2, **characterized in that** the cushion (8) is connected to the lower connecting device (13) by an intermediate hinge of transverse axis.

4. Seat according to any one of the preceding claims, **characterized in that** the backrest (9) is connected to the cushion by a lower backrest hinge (42) of transverse axis.

5. Seat according to any one of Claims 2 to 4, **characterized in that** the upper connecting device (16) is provided to be fixed relative to an upper structural element and the lower connecting device (13) is suitable for being mounted with the possibility of displacement along a longitudinal axis relative to a lower structural element of the vehicle.

6. Seat according to any one of Claims 2 to 4, **characterized in that** the upper connecting device (16) is suitable for being mounted with the possibility of displacement along a longitudinal axis relative to an upper structural element of the vehicle and the lower connecting device (13) is provided to be fixed relative to a lower structural element.

7. Seat according to any one of Claims 1 to 4, **characterized in that** the upper connecting device (16) is suitable for being mounted with the possibility of displacement along a longitudinal axis relative to an upper structural element (17) of the vehicle and the lower connecting device (13) is suitable for being mounted with the possibility of displacement along a longitudinal axis relative to a lower structural element of the vehicle.

8. Seat according to any one of the preceding claims, **characterized in that** a connection is equipped with blocking means (30, 33) able to be unlocked.

9. Motor vehicle provided with at least one seat according to any one of the preceding claims, the seat (7) being connected by the cushion connection (13) to a floor of the vehicle (2) and by the upper backrest connection (16) to an upper structural element (17) of the motor vehicle.

10. Vehicle according to Claim 9, **characterized in that** it comprises a control unit (3) which is mobile along a longitudinal axis relative to the seat (7).

## Patentansprüche

1. Verstellbarer Kraftfahrzeugsitz, der eine Sitzfläche (8), eine untere Verbindungsvorrichtung (13) zur Verbindung der Sitzfläche mit einem unteren Fahrzeugstrukturelement (2) und eine Rückenlehne (9) umfasst, wobei der Sitz so ausgebildet ist, dass er in seiner Gebrauchsposition das Verstellen der Position des Sitzes gestattet, **dadurch gekennzeichnet, dass** er eine obere Verbindungsvorrichtung (16) zur Verbindung eines oberen Teils (15) der Rückenlehne mit einem oberen Strukturelement (17) des Fahrzeugs umfasst, wobei die obere Verbindungsvorrichtung (16) geeignet ist, eine obere Verbindung zu bilden, die das Verstellen der Position des Sitzes in seiner Gebrauchsposition gestattet.

2. Sitz nach Anspruch 1, **dadurch gekennzeichnet, dass** die obere Verbindungsvorrichtung (16) mit dem oberen Rückenlehnenteil (15) über eine obere Zwischenverbindung (38) verbunden ist, die geeignet ist, eine Verschiebung des oberen Rückenlehnenteils (15) bezüglich der oberen Verbindungsvorrichtung (16) mit einer Drehung gemäß einer ersten Querachse und einer Translation gemäß einer zweiten Achse, die in einer Längsebene liegt und von einer Längsachse verschieden ist, zu gestatten.

3. Sitz nach Anspruch 1 oder 2, **dadurch gekennzeichnet, dass** die Sitzfläche (8) über ein Zwischengelenk mit Querachse mit der unteren Verbindungsvorrichtung (13) verbunden ist.

4. Sitz nach einem der vorhergehenden Ansprüche, **dadurch gekennzeichnet, dass** die Rückenlehne (9) über ein unteres Rückenlehnengelenk (42) mit Querachse mit der Sitzfläche verbunden ist.

5. Sitz nach einem der Ansprüche 2 bis 4, **dadurch gekennzeichnet, dass** die obere Verbindungsvorrichtung (16) dazu vorgesehen ist, bezüglich eines oberen Strukturelements fest zu sein, und die untere Verbindungsvorrichtung (13) geeignet ist, so montiert zu sein, dass die Möglichkeit einer Verschiebung bezüglich eines unteren Strukturelements des Fahrzeugs gemäß einer Längsachse besteht.

6. Sitz nach einem der Ansprüche 2 bis 4, **dadurch gekennzeichnet, dass** die obere Verbindungsvorrichtung (16) geeignet ist, so montiert zu sein, dass die Möglichkeit einer Verschiebung bezüglich eines oberen Strukturelements des Fahrzeugs gemäß einer Längsachse besteht, und die untere Verbindungsvorrichtung (13) dazu vorgesehen ist, bezüglich eines unteren Strukturelements fest zu sein.

7. Sitz nach einem der Ansprüche 1 bis 4, **dadurch gekennzeichnet, dass** die obere Verbindungsvorrichtung (16) geeignet ist, so montiert zu sein, dass die Möglichkeit einer Verschiebung bezüglich eines oberen Strukturelements (17) des Fahrzeugs gemäß einer Längsachse besteht, und die untere Verbindungsvorrichtung (13) geeignet ist, so montiert zu sein, dass die Möglichkeit einer Verschiebung bezüglich eines unteren Strukturelements des Fahrzeugs gemäß einer Längsachse besteht.

8. Sitz nach einem der vorhergehenden Ansprüche, **dadurch gekennzeichnet, dass** eine Verbindung mit Blockiermitteln (30, 33) versehen ist, die entriegelt werden können.

9. Kraftfahrzeug, das mit mindestens einem Sitz nach einem der vorhergehenden Ansprüche ausgerüstet ist, wobei der Sitz (7) über die Sitzflächenverbindung (13) mit einem Boden (2) des Fahrzeugs und über die obere Rückenlehnenverbindung (16) mit einem oberen Strukturelement (17) des Kraftfahrzeugs verbunden ist.

10. Fahrzeug nach Anspruch 9, **dadurch gekennzeichnet, dass** es eine Steuereinheit (3) umfasst, die gemäß einer Längsachse bezüglich des Sitzes (7) beweglich ist.
